# EUROPÄISCHE PATENTANMELDUNG

(11) **EP 2 289 964 A2**
(43) Veröffentlichungstag der Anmeldung: **02.03.2011**
(21) Anmeldenummer: 10012038.5
(22) Anmeldetag: 20.11.2001
(51) Int. Cl.: C08G 61/12, C08L 65/00, C09D 5/24, H01B 1/12

(54) **Dispergierbare Polymerpulver**

(30) Priorität: 22.11.2000 DE 10058118; 09.11.2001 DE 10155238
(62) Teilanmeldung aus: 01997515.0
(71) Anmelder: H.C. Starck Clevios GmbH, 38642 Goslar (DE)
(72) Erfinder: Weßling, Bernhard, 22941 Bargteheide (DE); Kirchmeyer, Stephan Dr., 51375 Leverkusen (DE); Gehrmann, Dietrich, 51381 Leverkusen (DE)
(74) Vertreter: Herzog, Martin

(57) **Zusammenfassung**

Die Erfindung betrifft dispergierbare Polymerpulver, ihre Herstellung und Verwendung durch Eincompoundieren der Pulver in Formmassen, vorzugsweise aus Polycarbonat, Polyamid, Polyurethan, Polyacrylnitril oder einem Polyalkylen.

## Beschreibung

Die Erfindung betrifft dispergierbare Polymerpulver, ihre Herstellung und Verwendung.

Organische, leitfähige Polymere haben in der Technik mehr und mehr Verbreitung gefunden. Einsatzgebiete sind z.B. die Durchkontaktierung von Leiterplatten (EP-A-553 671), Antistatikausrüstung fotografischer Filme (EP-A-440 657) oder als Elektrode in Feststoffelektrokondensatoren (EP-A-340 512). Besondere Bedeutung haben Poly-3,4-alkylendioxythiopene erlangt, die sich durch hohe Stabilität und elektrische Leitfähigkeit auszeichnen.

In EP-A-440 657 werden wasserlösliche bzw. wasserdispergierbare Polyalkylendioxythiophene beschrieben. Diese werden direkt in Gegenwart von Polyanionen vorzugsweise Polystyrolsulfonsäure in wässriger Phase synthetisiert. Die wässrigen Zubereitungen werden zur Herstellung leitfähiger bzw. antistatischer Beschichtungen eingesetzt.

Aus EP-A-329 768 sind Polymerpulver enthaltend ein organisches Polymer, beispielsweise Polythiophen, bekannt Gemäß Beispiel 2 können sie unter Verwendung von Nitropropan oder Nitromethan als Lösungsmittel/Dispergiermittel hergestellt werden.

Aus Mol. Cryst. Liq. Cryst. 1999, Vol. 327, Seiten 237-240, ist der Versuch bekannt, Poly(3,4-ethylendioxythiophen) in Gegenwart von Dodecylbenzolsulfonsäure in Lösungsmitteln zu polymerisieren, das erhaltene Poly(3,4-ethylendioxythiophen) zu filtern und mittels Ultraschall und Zusatz des Dispergierhilfsmittels Dodecylbenzolsulfonsäure in Lösungsmitteln zu lösen. Die so hergestellten Polythiophene waren jedoch nicht oder nur teilweise löslich.

Die Erfindung betrifft ein vorzugsweise in Wasser dispergierbares Pulver, enthaltend im Wesentlichen Polymere T mit wiederkehrenden Thiopheneinheiten und mindestens ein weiteres polyanionisches Polymer P. Das polyanionische Polymer P kann als Salz oder Säure vorliegen. Die Teilchengröße der Pulver ist vorzugsweise kleiner als 1µm.

In einer bevorzugten Ausführungsform ist das Pulver dadurch gekennzeichnet, dass die Polymere T erhalten werden durch Polymerisation von Thiophenen der allgemeinen Formel 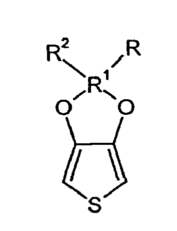 in der
- R¹: für einen gegebenenfalls substituierten Alkylenrest mit 1 bis 10 Kohlenstoffatomen, insbesondere -CH₂-CH₂- und
- R und R²: gleich oder verschieden für Wasserstoff, einen linearen oder verzweigten Alkylrest mit 1 bis 20 Kohlenstoffatomen, OH, O-CH₂-CH₂-CH₂-SO₃H oder O-Alkyl mit 1-18 C-Atomen stehen.

Besonders bevorzugt ist Ethylendioxythiophen.

In einer weiteren bevorzugten Ausführungsform ist das Pulver dadurch gekennzeichnet, dass das Polymer P mindestens eine oder mehrere Sulfonsäuregruppen oder ein Salz davon aufweist und insbesondere Polystyrolsulfonsäure oder ein Salz davon ist. Erfindungsgemäße Pulver können dadurch gewonnen werden, dass man aus einer kolloidalen Dispersion der Polymere das Wasser so entfernt, dass die Teilchenstruktur der kolloidalen Teilchen im Wesentlichen erhalten bleibt.

In einer bevorzugten Ausführungsform handelt es sich um redispergierbare Pulver, d.h. dass sie aus einer Dispersion gewonnen wurden und das so erhaltene Pulver wieder dispergiert werden kann. Dispergierbare und redispergierbare Pulver im Sinne der vorliegenden Erfindung zeichnen sich dadurch aus, dass die aus ihnen erhaltenen Dispersionen in einem Dispergiermedium stabile Dispersionen sind, die wenigstens 4 Wochen, insbesondere wenigstens 6 Monate keine oder keine wesentlichen Änderungen ihrer Eigenschaften bei Lagerung bei 20°C aufweisen.

Ein bevorzugtes Verfahren zum Herstellen von dispergierbaren Pulvern ist dadurch gekennzeichnet, dass man eine Dispersion oder Lösung enthaltend Polymere mit wiederkehrenden Thiopheneinheiten und mindestens einem weiteren Polymer P mit einem organischen Fällmittel versetzt, in dem die Polymere unlöslich sind, so viel Fällmittel zugibt, bis die Polymeren ausfallen und dieses anschließend isoliert und trocknet.

Als organische Fällmittel sind hierfür prinzipiell alle organischen Lösemittel geeignet, die mit der die Polymere enthaltenden Dispersion oder Lösung mischbar sind und ein Ausfällen des Polymers bewirken. Es sind dies bevorzugt mit Wasser zumindest teilweise mischbare organische Lösungsmittel wie Alkohole, z.B. Methanol, Ethanol, Propanol, Isopropanol und Butanol, Ketone wie z.B. Aceton und Butanon und Ether wie z.B. Tetrahydrofuran.

Ein weiteres bevorzugtes Verfahren zum Herstellen von dispergierbaren Pulvern ist dadurch gekennzeichnet, dass man eine Dispersion oder Lösung enthaltend Polymere mit wiederkehrenden Thiopheneinheiten und mindestens einem weiteren polyanionischen Polymer P mit einem Salz versetzt, die Zugabe des Salzes so lange fortsetzt, bis die Polymeren ausfallen und anschließend isoliert und trocknet.

Als Salze sind hierfür prinzipiell alle Salze geeignet, die mit der die Polymere enthaltenden Dispersion oder Lösung mischbar sind und ein Ausfällen des Polymers bewirken. Beispiele solcher Salze sind z.B. Alkalisalze wie z.B. Natriumchlorid, Natriumbromid, Natriumiodid, Kaliumchlorid, Kaliumbromid, Natriumcarbonat und -hydrogencarbonat, Natriumsulfat und -hydrogensulfat, Kaliumcarbonat und -hydrogencarbonat, Kaliumsulfat und -hydrogensulfat, Natrium- und Kaliumformiat, -acetat, -proprionat und -butyrat, Alkalisulfonate wie Natrium- und Kaliummethansulfonat, -trifluormethansulfonat, das Natrium- bzw. Kaliumsalz von Polystyrolsulfonsäuren. Die Natriumsalze oder Kaliumsalze von Benzolsulfonsäure, Toluolsulfonsäuren und Ethylbenzolsulfonsäuren, Ammoniumsalze wie Ammoniumchlorid, Ammoniumcarbonat und Ammoniumsulfat, lösliche Erdalkalisalze wie Magnesium- und Calciumchlorid, -bromid und -iodid, und lösliche Übergangsmetallsalze.

Ein weiteres bevorzugtes Verfahren zum Herstellen dispergierbarer Pulver ist dadurch gekennzeichnet, dass man eine Dispersion oder Lösung enthaltend Polymere P mit wiederkehrenden Thiopheneinheiten und mindestens einem weiteren polyanionischen Polymer P gefriergetrocknet. Hierzu sind folgende Ausführungsformen besonders bevorzugt:
Eine Ausführungsform ist dadurch gekennzeichnet, dass man die Dispersion oder Lösung in eine Tropfchenform übetfuhrt, eingefroren und dann gefriergetrocknet wird.
Eine Ausführungsform ist dadurch gekennzeichnet, dass die Lösung oder Dispersion durch eine Düse zerstäubt wird.
Eine weitere Ausführungsform ist dadurch gekennzeichnet, dass die Lösung oder Dispersion geprillt wird.
Eine weitere Ausführungsform ist dadurch gekennzeichnet, dass die Lösung oder Dispersion eingefroren, mechanisch zerteilt und dann gefriergetrocknet wird.

Die Gefriertrocknung der Dispersionen oder Lösungen kann nach allgemein bekannten Verfahren vorgenommen werden, insbesondere gemäß "Trocknungstechnik", Zweiter Band, Springerverlag, Berlin Heidelberg New York London Tokyo 1978, S. 523 - 525: Gefriertrocknungstunnel, Etagenschwingbodentrockner oder in "Trocknungstechnik", Dritter Band, Springerverlag, Berlin Heidelberg New York London Tokyo 1989: S. 189-190: Kratzkühler, Einfrierband, Tellertrockner oder in "Handbook of Industrial Drying", second edition revised and extended, Vol. 1. Ed. By Arun S. Mujumdar, Marcel Dekker, Inc. New York, Basel, Hong Kong, 1995, S. 323 -326, Tunnel Freeze Dryers, Vacuum-spray freeze dryer, beschrieben sind.

In einer Ausführungsform wird das Bulk-Gefriertrocknungsverfahren verwendet, indem man Lösung in Vials abfüllt und in dieser Form auf einer gekühlten Platte einfriert und anschließend im Vakuum trocknet. Dabei wird das gefrorene Lösungsmittel (hier Wasser) durch Sublimation direkt aus dem gefrorenen Zustand in die Dampfphase überführt und die Lösung auf diese Weise vom Wasser befreit. Die Sublimation findet vorzugsweise bei Produkttemperaturen zwischen —5°C und -50°C statt.

In einer weiteren bevorzugten Ausführungsform wird das Sprühgefriertrocknungsverfahren verwendet, indem durch Zertropfen der Lösung in Flüssigstickstoff oder in verdampfenden Stickstoff ein schockgefrorenes Mikrogranulat erzeugt und dieses Granulat auf einer beheizten Platte im Vakuum gefriergetrocknet. Durch das sehr schnelle Einfrieren der Tropfen entsteht eine andere Eiskristallstruktur als beim Bulkverfahren (langsames Einfrieren). Die Kristallstruktur des gefrorenen Produkts beeinflusst das Trocknungsverhalten und häufig auch die Produkteigenschaften.

In einer weiteren bevorzugten Ausführungsform wird die Lösung oder Dispersion auf eine gekühlte Walze aufgetragen, beispielsweise dadurch, dass die Walze in die Lösung bzw. Dispersion eintaucht. Die Lösung bzw. Dispersion gefriert zum Teil an der Walze und wird während der Rotation der Walze von der Walze in Form von sogenannten Schuppen entfernt. Diese Schuppen werden mit einem geeigneten Fördermedium, beispielsweise einem Förderband, in gefrorenem Zustand in einen Gefriertrocknungsraum eingebracht. In diesen wird in einer bevorzugten Ausführungsform in einer ersten Zone das anhaftende Lösungsmittel bzw. Dispergiermedium (im allgemeinen Wasser) durch Sublimation entfernt, in einer anschließenden Zone kann adsorptiv gebundenes Dispergier- bzw. Lösungsmittel durch Erhöhung der Temperatur entfernt werden. Das abgetriebene Lösungs- bzw. Dispergiermittel wird zweckmäßigerweise in einer speziellen Zone ausgefroren, die zwischen Gefriertrocknungsraum und der Pumpe liegt, die in dem Gefriertrocknungsraum das notwendige Vakuum erzeugt.

In der ersten Zone im Gefriertrocknungsraum wird zweckmäßigerweise ein Luftdruck < 0,1 mbar eingestellt, wobei in einer bevorzugten Ausführungsform die Temperatur tiefer als -10°C ist. In dem Nachtrocknungsabschnitt kann der gleiche oder ein geringerer Druck eingestellt werden, während die Temperatur gegebenenfalls höher sein kann und in einer bevorzugten Ausführungsform bis 20°C betragen kann.

Ein besonders bevorzugtes Verfahren zum Herstellen von dispergierbaren Pulvern ist dadurch gekennzeichnet, dass man eine Dispersion oder Lösung enthaltend Polymere mit wiederkehrenden Thiopheneinheiten und mindestens einem weiteren polyanionischen Polymer P mit einem Lösemittel versetzt, das mit Wasser ein Azeotrop bildet, das Wasser unter azeotroper Destillation entfernt und das erhaltene Polymer isoliert und trocknet.

Die für das besonders bevorzugtes Verfahren einsetzbaren Lösungsmittel sind Lösemittel, die mit Wasser in der flüssigen Phase nicht oder nur wenig mischbar sind, in der Dampfphase jedoch mit Wasser ein Gemisch bilden. Derartige Lösemittel sind als solche dem Fachmann bekannt. Es kann sich um einzelne Lösemittel oder Lösemittelgemische handeln. Geeignete Lösemittel sind beispielsweise in "CRC Handbook of Chemistry and Physics, 69.th Edition, 188, CRC Press, Boca Raton" auf den Seiten D-12 bis D-13 beschrieben. Dies sind z.B. Kohlenwasserstoffe wie Pentan, Hexan, Cyclohexan und Heptan, halogenierte Kohlenwasserstoffe wie Chloroform, Tetrachlorethylen und Tetrachlorkohlenstoff, Alkohole wie Butylalkohol, Pentanol und Benzylalkohol, Ester wie Buttersäuremethylester, Buttersäureethylester und Propionsäurepropylester, aromatische Kohlenwasserstoffe wie Chlorbenzol, Benzol, Toluol, Ethylbenzol und Xylol oder Ether wie z.B. Butylethylether.

Geeignete Lösemittelgemische sind Gemische aus den vorgenannten Lösemitteln sowie Gemische aus den vorgenannten Lösemitteln mit Lösemitteln, die mit Wasser mischbar sind. Letztere Lösemittelgemische sind beispielsweise in "CRC Handbook of Chemistry and Physics, 69.th Edition, 188, CRC, Press, Boca Raton" auf den Seiten D-24 bis D-27 beschrieben.

Dies sind z.B. Gemische aus Tetrachlorkohlenstoff und Ethanol, Tetrachlorkohlenstoff und 2-Butanol, Chloroform und Methanol, Chloroform und Ethanol, Tetrachlorethylen und n-Propylalkohol, Trichlorethylen und Acetonitril, Trichlorethylen und Ethanol, Trichlorethylen und Isopropanol, Benzol und Acetonitril, Ethylacetat und Ethanol, Benzol und Ethanol, Cyclohexan und Ethanol, Toluol und Ethanol, n-Hexan und Ethanol, n-Heptan und Ethanol, Benzol und Isopropanol, Cyclohexan und Isopropanol, Toluol und Isopropranol, Propylalkohol, Propionsäureethylester, Propylalkohol und Benzol, Butylalkohol und Hexan, Butylalkohol und Dibutylether sowie Isobutylalkohol und Toluol.

Die Lösemittel bzw. Lösemittelgemische werden verwendet, um das Wasser durch azeotrope Destillation zu entfernen. Die Lösemittel bzw. Lösemittelgemische bilden während der destillativen Entfernung des Wassers mit dem Wasser ein Gemisch in der Dampfphase. Die Siedekurve der Mischung mit dem Lösemittel bzw. dem Lösemittelgemisch, d.h. der Dampfdruck der Mischung hat bei der Zusammensetzung der Mischung ein Minimum. Das Wasser wird zusammen mit dem Lösemittel oder dem Lösemittelgemisch abdestilliert oder wird mit Hilfe geeigneter Apparaturen zurückgeführt. Die Destillation wird so gegebenenfalls unter Zusatz von weiterem Lösemittel bzw. Lösemittelgemisch so lange durchgeführt, bis das Wasser aus der wässrigen Lösung oder Dispersion der gegebenenfalls substituierten Polythiophenen zu mindestens 90 % bevorzugt 95 %, besonders bevorzugt 99 % entfernt ist. Verbleibendes Lösemittel oder Lösemittelgemisch kann von den erfindungsgemäßen Pulvern im Anschluss an die azeotrope Destillation durch an sich bekannte Verfahren, z.B. Filtration, Destillation oder Trocknung entfernt werden.

Das mittels dieser Verfahren isolierte Polymer wird vorzugsweise gewaschen und getrocknet Erhalten werden Polymerteilchen mit wiederkehrenden Thiopheneinheiten und mindestens einem weiteren polyanionischen Polymer P. Diese können beide zusammen in Form eines Komplexes vorliegen.

In einer besonders bevorzugten Ausführungsform werden die Dispersionen oder Lösungen zur Gewinnung der Pulver hergestellt gemäß europäischer Patentschrift EP-B-0 440 957, Seite 3, Zeile 15 bis Seite 4, Zeile 16 durch oxidative Polymerisation von Thiophenen mit für die oxidative Polymerisation üblichen Oxidationsmitteln und/oder Sauerstoff oder Luft in Gegenwart von Polystyrolsulfonsäure, bevorzugt in wässrigem Medium, bei Temperaturen von 0 bis 100°C. Durch die oxidative Polymerisation erhalten die Polythiophene positive Ladungen.

Zur Polymerisation werden die Thiophene, Polystyrolsulfonsäure und Oxidationsmittel in einem organischen Lösungsmittel oder - vorzugsweise - in Wasser gelöst und die Lösung solange bei der vorgesehenen Polymerisationstemperatur gerührt, bis die Polymerisation abgeschlossen ist.

Bei Verwendung von Luft oder Sauerstoff als Oxidationsmittel wird in die Thiophen, Polystyrolsulfonsäure und gegebenenfalls katalytische Mengen an Metallsalzen enthaltende Lösung solange Luft oder Sauerstoff eingeleitet, bis die Polymerisation abgeschlossen ist.

In Abhängigkeit von Ansatzgröße, Polymerisationstemperatur und Oxidationsmittel kann die Polymerisationszeit zwischen wenigen Minuten bis zu mehreren Stunden betragen. Im allgemeinen liegt die Zeit zwischen 30 Minuten und 10 Stunden. Die Stabilität der Dispersionen lässt sich durch während oder nach der Polymerisation zugefügte Dispergatoren wie Dodecylsulfonat verbessern.

Als Oxidationsmittel können die für die oxidative Polymerisation von Pyrrol geeigneten Oxidationsmittel verwendet werden; diese sind beispielsweise in J. Am. Chem. Soc. 85, 454 (1963) beschrieben. Bevorzugt sind aus praktischen Gründen preiswerte und leicht handhabbare Oxidationsmittel, z.B. Eisen-III-Salze wie FeCl₃ Fe(CIO₄)₃ und die Eisen-III-Salze organischer Säuren und organische Reste aufweisender anorganischer Säuren, ferner H₂O₂, K₂Cr₂O₇, Alkali- und Ammoniumpersulfate, Alkaliperborate, Kaliumpermanganat und Kupfersalze, wie Kupfertetrafluoroborat, Außerdem wurde gefunden, dass sich Luft und Sauerstoff, gegebenenfalls in Gegenwart katalytischer Mengen Metallionen, wie Eisen-, Cobalt-, Nickel-, Molybdän-- und Vanadiumionen, mit Vorteil als Oxidationsmittel verwenden lassen.

Die Verwendung der Persulfate und der Eisen-III-Salze organischer Säuren und der organische Reste aufweisenden anorganischen Sauren hat den großen anwendungstechnischen Vorteil, dass sie nicht korrosiv wirken.

Als Eisen-III-Salze organische Reste aufweisender anorganischer Säuren seien beispielsweise die Eisen-III-Salze der Schwefelsaurehalbester von C₁-C₂₀-Alkanolen, z.B. das Fe-III-Salz des Laurylsulfates genannt.

Als Eisen-III-Salze organischer Säuren seien beispielsweise genannt; die Fe-III-Salze von C₁-C₂₀-Alkylsulfonsäuren, wie der Methan- und der Dodecansulfonsäure; aliphatischen C₁-C₂₀-Carbonsäuren wie der 2-Ethylhexylearbonsäure; aliphatischen Perfluorcarbonsäuren, wie der Trifluoressigsäure und der Perfluoroctansäure; aliphatischen Dicarbonsäuren, wie der Oxalsäure und vor allem von aromatischen, gegebenenfalls durch C₁-C₂₀-Alkylgruppen substituierten Sulfonsäuren wie der Benzolsulfonsäure, p-Toluolsulfonsäure und der Dodecylbenzolsulfonsäure.

Es können auch Gemische dieser vorgenannten Fe-III-Salze organischer Säuren eingesetzt werden.

Für die oxidative Polymerisation der Thiophene werden theoretisch je Mol Thiophen 2,25 Äquivalente Oxidationsmittel benötigt (siehe z.B. J. Polym. Sc. Part A Polymer Chemistry Vol. 26, S. 1287 (1988)).

Vorzugsweise wird das Oxidationsmittel jedoch in einem gewissen Überschuss, z.B. einem Überschuss von 0,1 bis 2 Äquivalenten je Mol Thiophen angewendet.

Bei der oxidativen Polymerisation wird die erfindungsgemäß zu verwendende Polystyrolsulfonsäure in einer solchen Menge eingesetzt, dass auf 1 Mol Thiophen 0,25 bis 10, vorzugsweise 0,8 bis 8, Säuregruppen der Polystyrolsulfonsäure entfallen.

Für die oxidative Polymerisation werden die Thiophene und die Polystyrolsulfonsäure in einer solchen Menge Lösungsmittel gelöst, so dass stabile Polythiophen-Dispersionen erhalten werden, deren Feststoffgehalt vorzugsweise zwischen 0,5 und 55 Gew.%, vorzugsweise 5 bis 30 Gew.%, beträgt.

Das polyanionische Polymer P ist vorzugsweise eine Polystyrolsulfonsäure oder ein Salz davon mit einem Molekulargewicht von vorzugsweise 1 000 bis 2 000 000, besonders bevorzugt 2 000 bis 500 000. die Polystyrolsulfonsäure ist im Handel erhältlich oder nach bekannten Verfahren herstellbar (siehe Houben-Weyl, Methoden der organischen Chemie, Bd. E 20 Makromolekulare Stoffe, Teil 2, (1987), S. 1141ff).

Die nach dem erfindungsgemäßen Verfahren herstellbaren Pulver sind dispergierbar, d.h. sie können in einem Dispergiermedium, insbesondere Wasser gegebenenfalls unter Zusatz von mit Wasser mischbaren Lösemitteln zu Lösungen oder Dispersionen verarbeitet werden.

Nach der Dispergierung können die erfindungsgemäßen Pulver als Dispersionen oder Lösungen zur Herstellung von elektrischen leitfähigen oder antistatischen Beschichtungen verwendet werden z.B. durch Tränken, Besprühen, Tiefdruck, Rakeln oder Streichen. Nach dem Entfernen des Dispergiermediums, z.B. des Wassers liegt unmittelbar die von dem Polythiopen auf dem behandelten Formteil gebildete, von der Luftfeuchtigkeit unabhängige elektrische leitfähige oder antistatische Schicht vor.

Die erhaltenen Dispersionen können nach intensivem Rühren bzw. mittels üblicher Dispersionsverfahren erhalten werden und zeichnet sich dadurch aus, dass sie bereits ohne Filtration Partikel von deutlich unter 1 µm enthalten, und klar, d.h. nicht getrübt, sind.

Die Pulver lassen sich weiterhin zu Pasten verarbeiten, die beispielsweise auf Oberflächen zur Erzielung antistatischer Ausrüstungen aufgetragen werden.

Geeignete Einsatzgebiete sind z.B. die Ausrüstung von Kunststofffolien für die Verpackung elektronischer Bauteile und für Reinraumverpackungen, antistatische Ausrüstung von Kathodenstrahlröhren, antistatische Ausrüstung von photographischen Filmen, als transparente Elektroden, z.B. für Touch Screens und organische oder anorganische Elektrolumineszenzanzeigen, für die Herstellung von Kondensatoren, Batterien, Leiterplatten oder von elektrisch einfärbbaren Fensterscheiben.

Vor Herstellung der Beschichtungen können den erfindungsgemäßen Polythiophen-Dispersionen Bindemittel und/oder Vernetzer wie Polyurethane bzw. Polyurethandispersionen, Polyacrylate, Polyolefindispersionen, Epoxisilane wie 3-Glycidoxypropyltrialkoxysilan, zugesetzt werden. Weiterhin können Silanhydrolysate z.B. auf Basis von Tetraethoxysilan zur Erhöhung der Kratzfestigkeit bei Beschichtungen zugesetzt werden.

Die Herstellung der Beschichtungen erfolgt nach bekannten Verfahren wie Tränken, Sprühen, Rakeln, Tiefdruck, Offsetdruck, Vorhanggießen, Auftrag über Antragwalzen, Streichen usw..

### Beispiel 1

Gemäß EP-B-0 440 957, Seite 3, Zeile 15 bis Seite 4, Zeile 16, wird durch oxidative Polymerisation von Ethylendioxithiophen in Gegenwart von Polystyrolsulfonsäure eine Dispersion enthaltend im wesentlichen Polymerteilchen mit wiederkehrenden Thiopheneinheiten und Polystyrolsulfonsäure hergestellt. Die Dispersion wird mit Toluol im Verhältnis für die azeotrope Destillation mit Wasser gemischt (80:20). Dabei werden 60,6 g der Dispersion mit 240 g Toluol in einem Kolben gerührt und das Wasser/Toluol Azeotrop bei einer Temperatur von 84,1°C abdestilliert, bis nur noch ein Pulverrückstand im Kolben zurückblieb. Der Rückstand wurde mit Methanol aus dem Kolben gewaschen, trocken genutscht und das erhaltene feuchte Pulver 12 Stunden bei Raumtemperatur getrocknet. Das erhaltene Pulver hatte eine Restfeuchte von ca. 18 %.

### Beispiel 2

Verwendung eines erfindungsgemäßen Pulvers zur Herstellung einer Dispersion

0,5 g des Pulvers aus Beispiel 1 wurden mit 102 ml Wasser in einem Kolben intensiv gerührt. Es resultiert eine blaue, bereits ohne Filtration agglomeratfrei stabile Dispersion. Von der Dispersion aus Beispiel 2 und von der Ausgangsdispersion wurden jeweils durch Aufrakeln 250 mm dicke Film auf Polyethylenterephthalat-Folie aufgetragen, 3 h bei 100°C getrocknet und der Widerstand gemessen. Hierzu wurden im Abstand von jeweils 2 cm jeweils zwei 2 cm lange Elektroden aus Leitsilber aufgetragen und der Widerstand zwischen den Elektroden bestimmt.

| Dispersion | Widerstand |
|---|---|
| Dispersion aus Beispiel 2 | 450 kΩ |
| Ausgangsdispersion | 380kΩ |

### Beispiel 3

Man trocknete das Pulver aus Beispiel 1 bis auf eine Restfeuchte von 0,5 % bei 80°C in einem Ofen nach. Anschließend wurden 600 ml Zirkonium-Mahlkugeln (Durchmesser 0,5 mm) in 270,0 g Ethanol vorgelegt und in einer handelsüblichen Perlmühle mit bei 1 000 Umdrehungen gerührt. Während des Rührens gab man 3,8 g nachgetrocknetes Pulver aus Beispiel 1 aufgerührt in 35 g Ethanol in die Mühle und wusch mit 35 g Ethanol nach. Man mahlte 3 h bei 2 000 Umdrehungen pro Minute nach. Über Filtergewebe wurden die Mahlkugeln abgetrennt und die erhaltene Dispersion zur Entfernung von Abrieb über einen 4,5 µm Filter filtriert. Man erhielt eine stabile, feinteilige Dispersion, in der mikroskopisch keine groben Teilchen mehr feststellbar waren.

Von der erhaltenen Dispersion wurde wie in Beispiel 3 ein Film hergestellt und der Oberflächenwiderstand bestimmt. Es wurde ein Widerstand von 9,0 kOhm gemessen.

### Beispiel 4

Gemäß Beispiel 2 der EP-B-0 440 957 wird eine Dispersion mit wiederkehrenden Thiopheneinheiten hergestellt und gemäß den nachstehenden Beispielen gefriergetrocknet.

### Beispiel 4.1

Nach dem Bulk-Gefriertrocknungsverfahren wird die Dispersion in Glaskolben eingefüllt und auf einer gekühlten Stahlplatte bei -50°C eingefroren bei einer Kühlrate von 1°C/min. Die Haupttrocknung erfolgt bei einem Druck von 0,05 mbar und einer Temperatur von -20°C, die Nachtrocknung bei 0,03 mbar und +10°C.

Man erhält ein voluminöses Pulver, welches in Wasser redispergierbar ist.

### Beispiel 4.2

Die Dispersion wird in Flüssigstickstoff eingetropft. Die schockgeforenen Granulate werden auf Schälchen in einen Gefriertrockner eingetragen. Die Trocknung erfolgt unter den gleichen Bedingungen wie in Beispiel 4.1. Wiederum wird ein redispergierbares Pulver erhalten.

## Patentansprüche

1. Verfahren zum Herstellen von redispergierbaren Pulvern enthaltend im Wesentlichen Polymerteilchen T mit wiederkehrenden Thiopheneinheiten und mindestens ein weiteres polyanionisches Polymer P, **dadurch gekennzeichnet, dass** man eine Dispersion oder Lösung enthaltend Polymere mit wiederkehrenden Thiopheneinheiten und mindestens eine oder mehrere Sulfonsäuregruppen enthaltende polymere Verbindungen gefriertrocknet.

2. Verfahren nach Anspruch 1, **dadurch gekennzeichnet, dass** die Teilchengröße der erhaltenen Polymere kleiner als 1 µm ist.

3. Verfahren nach Anspruch 1 oder Anspruch 2, **dadurch gekennzeichnet, dass** die Polymerteilchen mit wiederkehrenden Thiopheneinheiten erhalten werden durch Polymerisation von Thiophenen der allgemeinen Formel 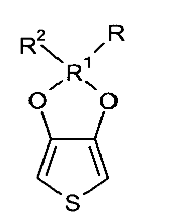 in der
R¹ für einen gegebenenfalls substituierten Alkylenrest mit 1 bis 10 Kohlenstoffatomen und
R und R² gleich oder verschieden für Wasserstoff, einen linearen oder verzweigten Alkylrest mit 1 bis 20 Kohlenstoffatomen, OH, O-CH₂-CH₂-CH₂-SO₃H oder O-Alkyl mit 1 - 18 C-Atomen stehen.

4. Verfahren nach wenigstens einem der vorhergehenden Ansprüche, **dadurch gekennzeichnet, dass** das Polymer P Polystyrolsulfonsäure ist.

5. Verfahren nach wenigstens einem der vorhergehenden Ansprüche, **dadurch gekennzeichnet, dass** die Dispersion oder Lösung in eine Tropfenform überführt, eingefroren und dann gefriergetrocknet wird.

6. Verfahren nach wenigstens einem der Ansprüche 1 bis 4, **dadurch gekennzeichnet, dass** die Lösung oder Dispersion durch eine Düse zerstäubt wird.

7. Verfahren nach wenigstens einem der Ansprüche 1 bis 4, **dadurch gekennzeichnet, dass** die Lösung oder Dispersion geprillt wird.

8. Verfahren nach wenigstens einem der Ansprüche 1 bis 4, **dadurch gekennzeichnet, dass** die Lösung oder Dispersion eingefroren, mechanisch zerteilt und dann gefriergetrocknet wird.

9. Verfahren nach wenigstens einem der Ansprüche 1 bis 4, **dadurch gekennzeichnet, dass** die Lösung oder Dispersion auf eine gekühlte Walze (Schuppenwalze) aufgetragen wird.

10. Pulver, hergestellt nach einem Verfahren gemäß wenigstens einem der vorhergehenden Ansprüche.

11. Verwendung der Pulver gemäß Anspruch 10 zur Herstellung leitfähiger Beschichtungen.

12. Verwendung der Pulver gemäß Anspruch 10 zur Herstellung leitfähiger Formmassen.

13. Verwendung der Pulver nach Anspruch 10 durch Eincompoundieren der Pulver in Formmassen, vorzugsweise aus Polycarbonat, Polyamid, Polyurethan, Polyacrylnitril oder einem Polyalkylen.
